# EUROPÄISCHE PATENTSCHRIFT

(11) **EP 2 259 075 B1**
(45) Veröffentlichungstag und Bekanntmachung des Hinweises auf die Patenterteilung: **07.05.2014**
(21) Anmeldenummer: 10155509.2
(22) Anmeldetag: 04.03.2010
(51) Int. Cl.: G01P 3/487, G01P 3/488, G01P 15/18, G01P 13/04

(54) **Verfahren zur Erfassung einer Drehung eines rotierbaren Teils**
Method for measuring a rotation of a rotating part
Procédé de détection d'une rotation d'une pièce rotative

(30) Priorität: 28.05.2009 DE 102009026531
(43) Veröffentlichungstag der Anmeldung: 08.12.2010
(73) Patentinhaber: Robert Bosch GmbH, 70442 Stuttgart (DE)
(72) Erfinder: Doering, Christoph Hans-Martin, 71636 Ludwigsburg (DE); Grzesik, Axel, 70197 Stuttgart (DE); Kukawka, Olivier, 71636 Ludwigsburg (DE); Gogel, Frank, 70449 Stuttgart (DE)

(56) Entgegenhaltungen:
- EP-A1- 1 770 400
- DE-A1- 19 648 271
- DE-A1-102004 017 191
- DE-A1-102007 029 819
- DE-C1- 19 717 364
- US-A- 5 192 877
- US-A- 5 489 844

## Beschreibung

### Stand der Technik

Die Erfindung geht aus von bekannten Verfahren und Vorrichtungen zur Erfassung einer Drehung, insbesondere einer Drehzahl, eines rotierbaren Teils. Derartige Verfahren und Vorrichtungen werden in verschiedenen Bereichen der Naturwissenschaften und Technik eingesetzt, beispielsweise in der Automobiltechnik zur Erfassung einer Drehung von Rädern, Nockenwellen, Kobelwellen oder im Bereich der Getriebesteuerung. Grundsätzlich sind verschiedene Verfahren und Vorrichtungen aus dem Stand der Technik bekannt, welche beispielsweise in Robert Bosch GmbH: Sensoren im Kraftfahrzeug, Ausgabe 2007, S. 117-119 beschrieben werden. Typischerweise werden dabei rotierbare Teile derart ausgestaltet, dass bei einer Drehung des rotierbaren Teils ein alternierendes Magnetfeld, beispielsweise ein periodisch variierendes Magnetfeld, erzeugt wird, welches mit einer Sensoranordnung erfasst werden kann. Diese bekannten Vorrichtungen können grundsätzlich auch im Rahmen der vorliegenden Erfindung erfindungsgemäß eingesetzt oder erfindungsgemäß modifiziert werden.

Weiterhin ist in DE 10 2007 018238 A1 eine Vorrichtung zur Erfassung einer Drehzahl eines rotierbaren Teils beschrieben, welche ein mit dem rotierbaren Teil koppelbares drehbewegliches magnetisches Polrad mit über den Umfang alternierend angeordneten magnetischen Nordpolen und Südpolen sowie mit Sensormitteln umfasst. Die Sensormittel weisen ein magnetfeldempfindliches Sensorelement auf, das das von dem Polrad erzeugte Magnetfeld erfasst. Die Sensormittel weisen zwei in einem Abstand angeordnete magnetfeldempfindliche Sensoren und einen ferromagnetischen Flussleiter auf. Der ferromagnetische Flussleiter kann insbesondere eingerichtet sein, um zumindest in einer ersten Drehrichtung senkrecht zu den jeweiligen Sensorflächen der Sensoren verlaufende Magnetfeldkomponenten zu vergrößern. Auch die in DE 10 2007 018238 A1 beschriebene Vorrichtung kann erfindungsgemäß modifiziert werden, so dass bezüglich möglicher Einzelheiten dieser Vorrichtung auch auf diese Druckschrift verwiesen werden kann.

Die bekannten Verfahren und Vorrichtungen basieren somit im Wesentlichen auf der Erfassung eines alternierenden Magnetfeldes, welches durch ein entsprechendes Geberrad erzeugt und/oder periodisch beeinflusst wird. Dabei wird in der Regel eine Sensoranordnung mit mehreren Sensoren verwendet. Grundsätzlich können dabei bekannte Messprinzipien zur Erfassung des Magnetfeldes zum Einsatz kommen, wie beispielsweise Hall-Sensoren, magnetoresistive Sensoren (beispielsweise AMR- oder GMR-Sensoren) oder andere Arten von Sensoren, welche eingerichtet sind, um Magnetfelder zu erfassen. Diese können beispielsweise in einer elektronischen Anordnung der Sensoranordnung integriert sein, beispielsweise einem integrierten Schaltkreis. So kann die Sensoranordnung beispielsweise ganz oder teilweise als applikationsspezifischer integrierter Schaltkreis (Application Specific Integrated Circuit, ASIC) ausgestaltet sein bzw. einen derartigen ASIC umfassen, welcher auch ein, zwei oder mehrere oder alle der Sensoren umfassen kann. Derartige integrierte Schaltkreise zur Erfassung von Magnetfeldern sind mittlerweile kommerziell erhältlich. So sind beispielsweise integrierte Schaltkreise erhältlich, welche Geschwindigkeitssignale ("speed") und Drehrichtungen ("direction") aus den entsprechenden Signalen der einzelnen Sensoren ableiten. Beispielsweise ist unter der Bezeichnung TLE4953C der Infineon AG, Deutschland, ein ASIC kommerziell erhältlich, welcher drei sensitive Hall-Elemente aufweist, aus denen die Signale "speed" und "direction" abgeleitet bzw. berechnet werden. Diese Signale als Funktion der Zeit sind in der Regel schwingende Signale, d.h. sich periodisch wiederholende Signale.

Beispielsweise für die genannten ASICs, jedoch auch für andere Arten von Sensoranordnungen, sind in vielen Fällen für die entsprechenden Anwendungen, beispielsweise Getriebesteuerungen, Maxima des Absolutbetrags dieser Sensorsignale bzw. von daraus abgeleiteten Differenzsignalen maßgeblich. Dementsprechend sind große Beträge dieser Maxima wünschenswert. Die in DE 10 2007 018238 A1 beschriebene Sensoranordnung mit dem magnetischen Flussleiter, welcher umgangssprachlich oft auch als "Homogenisierungsscheibe" bezeichnet wird, dient dem Zweck der Erzeugung großer Maxima der Signale. Die Homogenisierungsscheibe ist beispielsweise parallel zum ASIC auf der dem Geberrad abgewandten oder zugewandten Seite des ASIC angeordnet, um eine Vergrößerung des Luftspalts zwischen dem ASIC und dem Geberrad zu ermöglichen, welche aus baulichen Gründen in vielen Fällen wünschenswert ist.

Der Algorithmus der Auswertung der Signale der bekannten ASICs ist jedoch in vielen Fällen mit technischen Herausforderungen behaftet. So erfolgt die Auswertung der unterschiedlichen Signale in vielen Fällen zeitverzögert. Hierdurch kann jedoch die Situation eintreten, dass ein zeitverzögert ausgewertetes Signal betragsmäßig kleiner ist als gewünscht. In vielen Applikationen sind jedoch Untergrenzen für die Signale vorgegeben, welche für eine sinnvolle Auswertung nicht unterschritten werden dürfen. Hierdurch wiederum ist bedingt, dass der Luftspalt zwischen dem Geberrad und der Sensoranordnung in vielen Fällen geringer gewählt werden muss als dies technisch eigentlich erforderlich wäre.

### Offenbarung der Erfindung

Es werden daher ein Verfahren und ein Drehzahlerfassungssystem vorgeschlagen, welche die Nachteile bekannter Verfahren und Vorrichtungen zumindest weitgehend vermeiden. Das Verfahren kann insbesondere zur Optimierung eines Drehzahlsensors bei asymmetrischen Anforderungen eingesetzt werden, beispielsweise bei Vorrichtungen, in welchen die Genauigkeitsanforderungen bei einer Drehung in Vorwärtsrichtung höher sind als bei der Erfassung einer Drehung in Rückwärtsrichtung. Dies ist bei vielen Drehzahlerfassungssystemen der Fall, beispielsweise bei in Getriebesteuerungen eingesetzten Drehzahlerfassungssystemen. Das vorgeschlagene Verfahren dient zur Erfassung einer Drehung eines rotierbaren Teils. Wie oben dargestellt, kann es sich bei diesem rotierbaren Teil beispielsweise um ein Rad, eine Nockenwelle, eine Kurbelwelle oder ein rotierbares Teil eines Getriebes eines Kraftfahrzeugs handeln. Die Erfindung wird im Folgenden im Wesentlichen unter Bezugnahme auf Getriebesteuerungen beschrieben, ohne hierdurch eine andere Anwendung innerhalb oder außerhalb eines Kraftfahrzeugbereichs einzuschränken.

Bei dem vorgeschlagenen Verfahren wird ein Drehzahlerfassungssystem mit einem mit dem rotierbaren Teil koppelbaren oder gekoppelten Geberrad verwendet. Bei diesem Geberrad kann es sich grundsätzlich um eine beliebige Vorrichtung handeln, welche - gegebenenfalls in Zusammenwirkung mit weiteren Vorrichtungen - eingerichtet ist, um bei der Drehung des rotierbaren Teils ein alternierendes Magnetfeld zu erzeugen, also ein Magnetfeld mit einer mit der Drehung des rotierbaren Teils korrelierenden Änderung der Flussdichte. Beispielsweise kann das Geberrad ein magnetisches Polrad sein, insbesondere mit einer Mehrzahl alternierend angeordneter magnetischer Nordpole und Südpole. Diese Nordpole und Südpole können beispielsweise auf einem Umfang des Geberrads angeordnet sein. Auch andere Arten von Magneträdern sind jedoch grundsätzlich einsetzbar, beispielsweise ferromagnetische Magneträder, welche mit einem externen Felderzeuger zur Erzeugung eines Magnetfeldes zusammenwirken und das Magnetfeld entsprechend der Drehung des rotierbaren Teils beeinflussen.

Weiterhin umfasst das Drehzahlerfassungssystem eine Sensoranordnung mit mindestens drei räumlich zueinander versetzt angeordneten Sensoren. Die Sensoren können beispielsweise auf den oben beschriebenen Messprinzipien zur Erfassung von Magnetfeldern basieren, insbesondere auf dem Hall-Effekt. Die Sensoren können beispielsweise in einer linearen Anordnung angeordnet sein, senkrecht zu einer Drehrichtung des Geberrads und vorzugsweise in einer Ebene angeordnet mit dem Geberrad. Die Sensoren sind eingerichtet, um ein durch das Geberrad erzeugtes, d.h. unmittelbar erzeugtes oder beeinflusstes, Magnetfeld zu erfassen. Wie oben diskutiert, kann es sich dabei um das von dem Geberrad selbst und unmittelbar erzeugte Magnetfeld handeln, beispielsweise ein Magnetfeld eines Polrades, oder auch um ein externes Magnetfeld, welches durch das Geberrad beeinflusst wird, beispielsweise durch ein ferromagnetisches Geberrad, beispielsweise in Form eines Triggerrades. Diesbezüglich kann auf den oben genannten Stand der Technik, insbesondere auf Robert Bosch GmbH: Sensoren im Kraftfahrzeug, Ausgabe 2007, S. 119 verwiesen werden. Auch andere Ausgestaltungen des Geberrades und der Sensoranordnung sind grundsätzlich möglich. Wie oben dargestellt, kann die Sensoranordnung die Sensoren beispielsweise als Einzelsensoren oder als integrierte Sensoren umfassen. Insbesondere kann die Sensoranordnung einen integrierten Schaltkreis umfassen, welcher einzelne, mehrere oder alle der Sensoren umfassen kann, insbesondere einen ASIC.

Aus den Sensorsignalen der drei Sensoren werden mindestens ein erstes Differenzsignal und mindestens ein zweites, von dem ersten Differenzsignal verschiedenes Differenzsignal gebildet. Unter Differenzsignalen sind dabei im Rahmen der vorliegenden Erfindung allgemein Signale zu verstehen, in welchen eine Linearkombination aus Sensorsignalen zweier oder mehrerer der Sensoren gebildet werden, wobei mindestens zwei der Sensorsignale mit Koeffizienten mit unterschiedlichen Vorzeichen in diese Linearkombination eingehen.

Das Verfahren wird derart durchgeführt, dass das erste Differenzsignal und das zweite Differenzsignal phasenverschoben zueinander sind. Beispielsweise können diese Differenzsignale, wie unten weiter ausgeführt wird, im Normalzustand um eine Phasenverschiebung von π/2 gegeneinander phasenverschoben sein. Auch andere Arten von Phasenverschiebungen sind jedoch grundsätzlich möglich.

Das zweite Differenzsignal wird dabei mindestens zu einem Zeitpunkt t₂ erfasst. Dieser Zeitpunkt t₂ kann beispielsweise relativ zu einem Zeitpunkt t₁ des ersten Differenzsignals angegeben werden, beispielsweise einem Zeitpunkt t₁ eines Nulldurchgangs des ersten Differenzsignals, beispielsweise einem Nulldurchgang mit einer fallenden und/oder steigenden Flanke. Dies wird unten noch näher ausgeführt.

Wie oben dargestellt, wird das Verfahren in der Regel derart durchgeführt bzw. wird das Drehzahlerfassungssystem in der Regel derart betrieben, dass dieses die Drehung, insbesondere Drehzahlen, des rotierbaren Teils über einen vorgegebenen Drehzahlbereich hinweg erfasst. Dabei kann der Drehzahlbereich positive Drehzahlen, also Drehzahlen bei einer Drehung in Vorwärtsrichtung des rotierbaren Teils, und/oder auch Drehungen in einer negativen Richtung, also in einer Rückwärtsrichtung, also mit negativen Drehzahlen, umfassen. Die negativen Drehzahlen und die positiven Drehzahlen, d.h. die Erstreckung des Drehzahlbereichs in den positiven Bereich und in den negativen Bereich, kann dabei in der Regel verschieden ausgestaltet sein, so dass beispielsweise eine maximale Drehzahl in Vorwärtsrichtung eine maximale Drehzahl in Rückwärtsrichtung betragsmäßig erheblich übersteigt, beispielsweise um mindestens einen Faktor 2, vorzugsweise um mindestens einen Faktor 10 oder sogar mindestens einen Faktor 100.

Wie oben dargestellt, ist für viele Anwendungen ein über den vorgegebenen Drehzahlbereich der Drehzahl des rotierbaren Teils hinweg auftretender minimaler Wert des zweiten Differenzsignals, beispielsweise eines Richtungssignals, von Bedeutung, beispielsweise ein innerhalb eines vorgegebenen positiven Drehzahlbereichs (also in Vorwärtsrichtung) auftretender minimaler Wert des zweiten Differenzsignals. Durch diesen minimalen Wert, der bei allen möglichen Drehzahlen, insbesondere bei Drehungen in Vorwärtsrichtungen, auftreten kann, werden viele Anwendungen begrenzt. Bei dem vorgeschlagenen Verfahren wird daher durch den minimalen auftretenden Wert des zweiten Differenzsignals ein Grenzluftspalt zwischen dem Geberrad und der Sensoranordnung bestimmt. Dieser Grenzluftspalt ist der maximale Spalt, welcher zwischen dem Geberrad und der Oberfläche der Sensoranordnung, insbesondere mindestens einer Sensoroberfläche der Sensoranordnung, höchstens auftreten kann, damit beispielsweise der minimale Wert des zweiten Differenzsignals über den vorgegebenen Drehzahlbereich hinweg eine vorgegebene Untergrenze für das zweite Differenzsignal nicht unterschritten wird. Wie oben ausgeführt, kann der Grenzluftspalt insbesondere ein Luftspalt zwischen dem Geberrad und der Sensoranordnung sein, bei welchem der minimale Wert des zweiten Differenzsignals über den vorgegebenen Drehzahlbereich hinweg eine vorgegebene Untergrenze für das zweite Differenzsignal nicht unterschreitet. Bei vielen Anwendungen ist es jedoch, da der Luftspalt beispielsweise durch Vibrationen oder Erschütterungen schwanken kann, insbesondere im Kraftfahrzeugbereich, wünschenswert, den Grenzluftspalt möglichst groß auszugestalten. Dementsprechend muss der über den Drehzahlbereich auftretende minimale Wert des zweiten Differenzsignals möglichst groß ausgestaltet werden.

Dementsprechend wird vorgeschlagen, die Phasenverschiebung zwischen dem ersten Differenzsignal und dem zweiten Differenzsignal und/oder den Zeitpunkt t₂ derart zu wählen, dass zumindest in einer Vorwärtsdrehrichtung des rotierbaren Teils der Grenzluftspalt vergrößert, insbesondere maximiert wird. Diese Vergrößerung bzw. Maximierung kann insbesondere dadurch erfolgen, dass beispielsweise bei einem vorgegebenen Zeitpunkt t₂, welcher beispielsweise durch einen ASIC (beispielsweise dessen Taktfrequenz) vorgegeben wird, die Phase des zweiten Differenzsignals relativ zum ersten Referenzsignal aktiv derart verschoben wird, dass der minimale Wert des zweiten Differenzsignals gegenüber einem unverschobenen Signal vergrößert wird. Alternativ können die Phasenverschiebung und der Zeitpunkt t₂ auch so aufeinander angepasst werden, dass der minimale Wert des zweiten Differenzsignals nach dieser Anpassung größer ist als vor der genannten Anpassung.

Bei dieser Anpassung können dabei Verschlechterungen des minimalen Wertes des zweiten Differenzsignals in Rückwärtsdrehrichtung gegebenenfalls in Kauf genommen werden. So kann beispielsweise der minimale Wert des zweiten Differenzsignals über den vorgegebenen Drehzahlbereich in Vorwärtsrichtung erhöht werden, wohingegen der minimale Wert des zweiten Differenzsignals in Rückwärtsdrehrichtung des rotierbaren Teils betragsmäßig reduziert wird. Allgemein ist dabei im Rahmen der vorliegenden Erfindung unter dem "minimalen Wert" ein Betrag eines zweiten Differenzsignals als Funktion der Drehzahl zu verstehen, in einem Punkt, in welchem das Differenzsignal als Funktion der Drehzahl über den vorgegebenen Drehzahlbereich hinweg zumindest ein lokales Minimum aufweist. Insbesondere kann es sich dabei um eine maximale Drehzahl in Vorwärtsdrehrichtung handeln, da in der Regel das zweite Differenzsignal bzw. dessen Betrag mit steigender Drehzahl abnimmt. Das vorgeschlagene Verfahren macht sich dementsprechend üblicherweise auftretende Asymmetrien hinsichtlich der Anforderungen in Vorwärtsdrehrichtung und in Rückwärtsdrehrichtung zunutze. Dabei ist die Vorwärtsdrehrichtung und die Rückwärtsdrehrichtung grundsätzlich willkürlich festzulegen und/oder kann durch die Randbedingungen des Einsatzes des Verfahrens bzw. des Drehzahlerfassungssystems vorgegeben sein.

Der Zeitpunkt t₂ kann, wie oben ausgeführt, insbesondere in Bezug auf einen Zeitpunkt t₁ des ersten Differenzsignals gewählt werden. Beispielsweise kann der Zeitpunkt t₂ um eine Zeitspanne Δt gegenüber einem Zeitpunkt t₁ verschoben gewählt werden, welche durch ein bestimmtes Ereignis des ersten Differenzsignals (beispielsweise ein Maximum, ein Minimum oder einen Nulldurchgang) definiert wird. Insbesondere kann der Zeitpunkt t₁ beispielsweise derart gewählt werden, dass das erste Differenzsignal zum Zeitpunkt t₁ einen Nulldurchgang aufweist, beispielsweise einen Nulldurchgang mit fallender oder steigender Flanke.

Das erste Differenzsignal und das zweite Differenzsignal können beispielsweise eine Phasenverschiebung von π/2 + Δϕ aufweisen. Dabei sollte Δϕ ≠ 0 gewählt werden. Bei dem vorgeschlagenen Verfahren können Δϕ und/oder Δt derart gewählt werden, dass zumindest in der Vorwärtsdrehrichtung der Grenzluftspalt gegenüber dem Grenzluftspalt bei einer Phasenverschiebung um π/2, also einer Phasenverschiebung mit Δϕ = 0, vergrößert wird. Allgemein können die Phasenverschiebung Δϕ und die Zeitspanne Δt aufeinander abgestimmt sein. Ein theoretisches Maximum im zweiten Differenzsignal kann somit allgemein beispielsweise bei (Δϕ, Δt) = (0, 0) erreicht werden. In der Realität ist jedoch typischerweise Δt = c ≠ 0. In diesem Fall kann beispielsweise erfindungsgemäß (Δϕ, Δt) = (ϕ_{c}, c) gewählt werden, so dass zumindest in der Regel das theoretische Maximum durch die gewählte Phasenverschiebung zumindest näherungsweise wieder erreicht werden kann.

Insbesondere kann innerhalb des vorgegebenen Drehzahlbereichs eine kritische Drehzahl ωₖᵣᵢₜ vorgegeben werden. Diese kritische Drehzahl ωₖᵣᵢₜ kann beispielsweise eine maximale Drehzahl, beispielsweise in Vorwärtsdrehrichtung, sein, beispielsweise eine Drehzahl, welche den Drehzahlbereich nach oben hin begrenzt. Wie oben dargestellt, sinkt in der Regel der Wert des zweiten Differenzsignals mit zunehmender Drehzahl, so dass typischerweise der Wert des zweiten Differenzsignals bei maximaler Drehzahl einen minimalen Wert einnimmt. Grundsätzlich kann ωₖᵣᵢₜ jedoch auch auf andere Weise vorgegeben werden. Bei dem vorgeschlagenen Verfahren können insbesondere das erste Differenzsignal und das zweite Differenzsignal um eine Phasenverschiebung von π/2 + Δϕ gegeneinander verschoben werden, wobei Δϕ und/oder Δt derart gewählt werden können, dass Δt = Δϕ/ ωₖᵣᵢₜ. Die Wahl von Δϕ und/oder Δt kann dabei betragsmäßig erfolgen, so dass die genannte Beziehung betragsmäßig erfüllt ist, da die Vorzeichen beispielsweise konventionsabhängig sein können.

Diese Beziehung kann auch lediglich im Wesentlichen erfüllt sein, mit typischerweise tolerierbaren Abweichungen, beispielsweise Abweichungen um nicht mehr als 5 % einer vorgegebenen Untergrenze für das zweite Differenzsignal. Durch Erfüllen der genannten Beziehung Δt = Δϕ ωₖᵣᵢₜ kann sichergestellt werden, dass die Phasenverschiebung genau derart auf den gewählten Zeitpunkt t₂ angepasst wird, dass das zweite Differenzsignal zu einem Zeitpunkt erfasst wird, bei welchem dieses einen maximalen Wert annimmt. In der Regel kann dies, wie oben ausgeführt, derart erfolgen, dass die genannte Beziehung bei der maximalen Drehzahl innerhalb des Drehzahlbereichs in der Vorwärtsrichtung erfolgt, d.h. derart, dass ωₖᵣᵢₜ die maximale Drehzahl innerhalb des Drehzahlbereichs in der Vorwärtsrichtung ist.

Das genannte Verfahren beruht also auf einer gezielten Herbeiführung eines verbesserten, beispielsweise optimierten Messzeitpunktes t₂ und/oder auf einer gezielten Herbeiführung einer Phasenverschiebung, so dass das zweite Differenzsignal optimal oder zumindest in verbesserter Qualität und/oder mit verbesserter Stärke über den gesamten vorgegebenen Drehzahlbereich, zumindest in Vorwärtsrichtung, erfasst werden kann. Neben oder alternativ zu einer geeigneten Wahl des Erfassungszeitpunktes t₂ des zweiten Differenzsignals kann also auch eine gezielte Phasenverschiebung eingesetzt werden. Diese Phasenverschiebung kann beispielsweise durch eine gezielt herbeigeführte Asymmetrie in den Sensorsignalen der Sensoren bei einer Drehung des rotierbaren Teils in Vorwärtsrichtung und in Rückwärtsrichtung erzeugt werden, wobei der Grad der Asymmetrie die Phasenverschiebung bestimmt.

In einer vorgeschlagenen Verfahrensvariante kann dies beispielsweise dadurch erfolgen, dass die Sensoranordnung mindestens einen magnetischen Flussleiter, vorzugsweise einen ferromagnetischen Flussleiter, aufweist. Dieser magnetische Flussleiter kann beispielsweise zwischen den Sensoren und dem Geberrad und/oder auch hinter den Sensoren angeordnet sein. Für die Ausgestaltung dieses magnetischen Flussleiters kann beispielsweise auf die oben genannte DE 10 2007 018 238 A1 verwiesen werden. Der magnetische Flussleiter kann dabei insbesondere derart eingerichtet sein bzw. eingerichtet werden, um dem Magnetfeld im Bereich der Sensoren eine Asymmetrie hinsichtlich der Anordnung der Sensoren aufzuprägen. Unter einer Asymmetrie ist dabei eine Asymmetrie der Sensorsignale und/oder von aus diesen Sensorsignalen abgeleiteten Differenzsignalen, insbesondere des zweiten Differenzsignals, bei einer Drehung des rotierbaren Elements in Vorwärtsdrehrichtung und in Rückwärtsdrehrichtung zu verstehen. Beispielsweise kann zu diesem Zweck der ferromagnetische Flussleiter gezielt geometrisch ausgestaltet und/oder angeordnet und/oder ausgerichtet werden, dass eine Asymmetrie des Magnetfeldes im Bereich der Sensoren auftritt.

Wie beispielsweise aus DE 10 2007 018 238 A1 bekannt, kann der magnetische Flussleiter beispielsweise mindestens eine ferromagnetische Homogenisierungsscheibe aufweisen. Die ferromagnetische Homogenisierungsscheibe kann insbesondere asymmetrisch zur Anordnung der Sensoren angeordnet und/oder ausgestaltet sein. Unter einer Homogenisierungsscheibe können dabei beispielsweise flache, ferromagnetische Scheiben zu verstehen sein, welche beispielsweise auf dem ASIC, beispielsweise zwischen dem ASIC und dem Geberrad, angeordnet sein können. Auch eine Anordnung hinter den Sensoren, also auf einer dem Geberrad abgewandten Seite der Sensoren, ist jedoch grundsätzlich möglich. Alternativ zu einer flachen, scheibenförmigen Ausgestaltung der Homogenisierungsscheibe kann die Homogenisierungsscheibe jedoch grundsätzlich auch andere, von einer Scheibenform abweichende Geometrien aufweisen. Die Ausgestaltung der ferromagnetischen Homogenisierungsscheibe kann beispielsweise mittels entsprechender Magnetfeld-Simulationen optimiert werden, wie sie dem Fachmann aus dem Bereich der Magnettechnik bekannt sind.

Die Sensoranordnung kann insbesondere mindestens einen mittleren Sensor, mindestens einen linken Sensor und mindestens einen rechten Sensor aufweisen, wobei der linke Sensor und der rechte Sensor auf gegenüberliegenden Seiten des mittleren Sensors angeordnet sind. Beispielsweise kann der mittlere Sensor in einer dem Geberrad am nächsten gelegenen Position der Sensoranordnung angeordnet sein, und der linke Sensor und der rechte Sensor können beispielsweise in einer Linie auf beiden Seiten des mittleren Sensors angeordnet sein, beispielsweise in einer Linie, welche parallel zur Ebene des Geberrads und vorzugsweise in dieser Ebene angeordnet ist. Der magnetische Flussleiter kann dann eingerichtet sein, um auf einer Sensoroberfläche des rechten Sensors und auf einer Sensoroberfläche des linken Sensors im Mittel unterschiedliche senkrechte Komponenten des Magnetfelds zu den Sensoroberflächen zu erzeugen, beispielsweise unterschiedliche mittlere Beträge der senkrechten Komponenten des Magnetfeldes. Auf diese Weise kann die genannte Asymmetrie bei einer Drehung in Vorwärtsrichtung und einer Drehung in Rückwärtsrichtung herbeigeführt werden, beispielsweise eine Asymmetrie hinsichtlich eines zweiten Differenzsignals, in welche Sensorsignale des linken Sensors und des rechten Sensors eingehen.

Wie oben dargestellt, kann die Phasenverschiebung π/2 + Δϕ zwischen dem ersten Differenzsignal und dem zweiten Differenzsignal insbesondere durch eine Ausgestaltung und/oder eine räumliche Positionierung und/oder räumliche Orientierung des magnetischen Flussleiters eingestellt werden. Beispielsweise kann der magnetische Flussleiter, beispielsweise die Homogenisierungsscheibe, gezielt verschoben werden relativ zur Sensoranordnung, um die Phasenverschiebung zu beeinflussen und damit beispielsweise die oben genannte Verbesserung und/oder Optimierung durchzuführen.

Wie oben dargestellt, können das erste Differenzsignal und das zweite Differenzsignal beispielsweise ein Geschwindigkeitssignal und/oder ein Richtungssignal umfassen. Beispielsweise kann das erste Differenzsignal als Geschwindigkeitssignal ausgestaltet sein, welches aus einer Differenz zwischen einem Sensorsignal des rechten Sensors und des linken Sensors gebildet wird. Wie oben angedeutet, kann es sich bei dieser Differenz grundsätzlich um eine beliebige Linearkombination dieser Sensorsignale handeln, in welcher die beiden Sensorsignale mit Koeffizienten mit unterschiedlichen Vorzeichen versehen sind. Bei dem zweiten Sensorsignal kann es sich beispielsweise um ein Richtungssignal handeln, welches aus einer Differenz zwischen einem Sensorsignal des mittleren Sensors und den Sensorsignalen des rechten Sensors und des linken Sensors gebildet wird. Dies kann beispielsweise wiederum eine Linearkombination beinhalten, bei welcher das Sensorsignal des mittleren Sensors einerseits und die Sensorsignale des rechten und des linken Sensors andererseits mit Koeffizienten versehen werden, welche unterschiedliche Vorzeichen aufweisen. Wird beispielsweise das Signal des linken Sensors mit L bezeichnet, das Signal des rechten Sensors mit R und das Signal des mittleren Sensors mit C, so kann beispielsweise das Richtungssignal D folgendermaßen gebildet werden: D=C-(R+L)/2. Das Geschwindigkeitssignal S kann beispielsweise nach S=R-L gebildet werden. Auch andere Linearkombinationen sind jedoch grundsätzlich möglich.

Wie oben dargestellt, wird neben dem beschriebenen Verfahren in einer oder mehreren der beschriebenen Ausführungsformen insbesondere ein Drehzahlerfassungssystem vorgeschlagen, welches eingerichtet sein kann, um ein Verfahren in einer der beschriebenen Varianten zur Erfassung einer Drehung eines rotierbaren Teils zu verwenden. Insbesondere kann das Drehzahlerfassungssystem unter Verwendung eines Verfahrens in einer oder mehreren der beschriebenen Ausführungsformen verbessert bzw. optimiert sein. Bezüglich der möglichen Ausgestaltungen und Elemente des Drehzahlerfassungssystems kann dementsprechend auf die obige Beschreibung verwiesen werden. Das Drehzahlerfassungssystem ist insbesondere eingerichtet, um aus Sensorsignalen der drei Sensoren mindestens ein erstes Differenzsignal und mindestens ein zweites, von dem ersten Differenzsignal verschiedenes Differenzsignal zu bilden, wobei das erste Differenzsignal und das zweite Differenzsignal phasenverschoben zueinander sind. Wie oben dargestellt, kann die Sensoranordnung weiterhin mindestens einen magnetischen Flussleiter aufweisen, vorzugsweise einen ferromagnetischen Flussleiter, wobei der magnetische Flussleiter eingerichtet ist, um dem Geberrad im Bereich der Sensoren eine Asymmetrie hinsichtlich der Anordnung der Sensoren aufzuprägen. Für weitere mögliche Ausgestaltungen des Drehzahlerfassungssystems kann auf die obige Beschreibung verwiesen werden.

Mittels des vorgeschlagenen Verfahrens und der vorgeschlagenen Drehzahlerfassungsvorrichtung kann den oben beschriebenen Herausforderungen bekannter Verfahren und Vorrichtungen auf technisch einfache und wirksame Weise begegnet werden. Insbesondere lassen sich erfindungsgemäß hohe Grenzluftspalten erzielen, so dass insgesamt die Robustheit des Drehzahlerfassungssystems und/oder des Gesamtsystems, beispielsweise einer Getriebesteuerung, erheblich gesteigert werden kann. Weiterhin lassen sich aufgrund der höheren Robustheit und einer erzielbaren Verbesserung der Signalqualität die Anwendungsspektren bekannter Drehzahlerfassungsvorrichtungen erweitern.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: einen zeitlichen Verlauf zweier Differenzsignale eines herkömmlichen Drehzahlerfassungssystems;
- Figuren 2A und 2B: eine erfindungsgemäße Herbeiführung einer Phasenverschie- bung der Differenzsignale in Figur 1 durch gezieltes Verschie- ben eines magnetischen Flussleiters; und
- Figur 3: die in Figur 1 gezeigten Differenzsignale vor und nach Durch- führung des in den Figuren 2A und 2B gezeigten Verfahrens.

### Ausführungsbeispiele

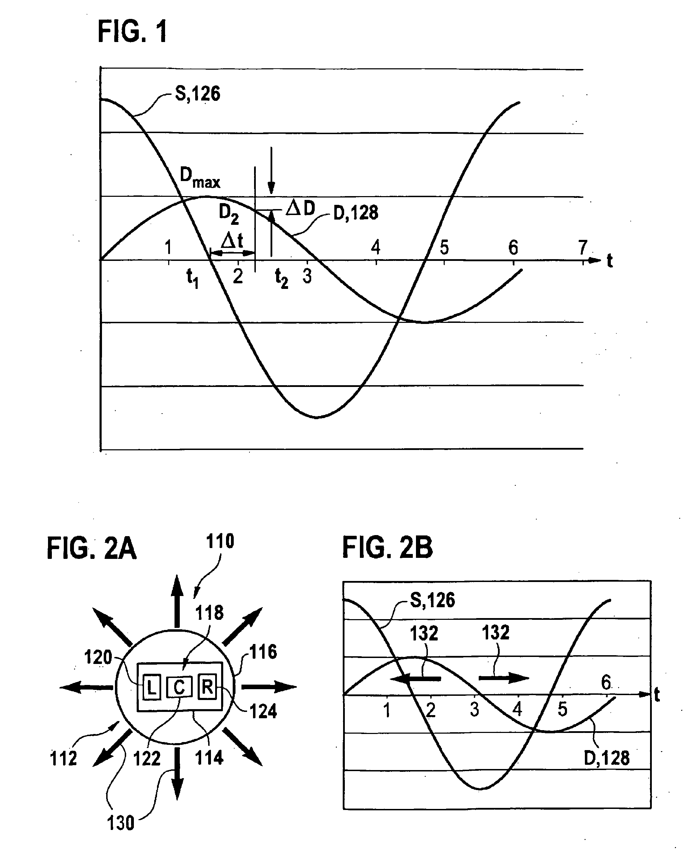

Die Erfindung wird im Folgenden beschrieben unter Bezugnahme auf ein Drehzahlerfassungssystem 110, welches in Figur 2A auszugsweise dargestellt ist. Gezeigt ist hier von dem Drehzahlerfassungssystem 110 lediglich eine Sensoranordnung 112, welche über einen Sensorchip 114 und einen magnetischen Flussleiter 116 verfügt. Weiterhin umfasst das Drehzahlerfassungssystem 110 ein in Figur 2A nicht gezeigtes Geberrad, für dessen Ausgestaltung beispielsweise auf den oben beschriebenen Stand der Technik verwiesen werden kann. Auch bezüglich der Ausgestaltung des magnetischen Flussleiters 116, welcher hier beispielsweise als Homogenisierungsscheibe ausgestaltet ist, kann auf den genannten Stand der Technik, insbesondere auf DE 10 2007 018 238 A1 und die dort dargestellten Ausgestaltungen, verwiesen werden. Der Sensorchip 114 umfasst in dem dargestellten Ausführungsbeispiel drei Sensoren 118, nämlich ein linker Sensor 120, ein mittlerer Sensor 122 und ein rechter Sensor 124. Die Signale dieser Sensoren 118 sind in Figur 2A symbolisch mit L, C und R bezeichnet. Der Sensorchip 114 kann beispielsweise als ASIC ausgestaltet sein und kann als Sensorelement 118 drei sensitive Hall-Elemente umfassen. Beispielsweise kann auf den oben genannten Sensorchip vom Typ TLE4953C der Infineon AG, Deutschland, verwiesen werden. Aus den Sensorsignalen L, C und R werden im vorliegenden Fall zwei Sensorsignale gebildet, nämlich ein Geschwindigkeitssignal ("speed") S=R-L und ein Richtungssignal ("direction") D=C-(R+L)/2. In Figur 1 sind die Signale S (Kurve 126) und D (Kurve 128) in willkürlichen Einheiten als Funktion der Zeit t (ebenfalls in willkürlichen Einheiten) aufgetragen.

Ein gängiger Algorithmus zur Auswertung des Maximums des Signals "direction", welches in Figur 1 mit Dₘₐₓ bezeichnet ist, erfolgt typischerweise durch eine Detektion des Nulldurchgangs zum Zeitpunkt t₁ des Signals "speed" 126. Bedingt durch die Taktzeiten des ASICs des Sensorchips 114 (typischerweise ca. 10 MHz) kann ein Zeitverzug Δt zwischen t₁ und der Ausleszeit t₂ des Signals "direction" 128 erfolgen. Dadurch ist das ausgelesene Signal D₂ nicht gleich Dₘₐₓ, sondern betragsmäßig um ΔD kleiner. Die Signale 126 und 128 in Figur 1 sind bereits um eine Phase π/2 gegeneinander verschoben. Die die genannte Reduktion um ΔD ausmachende zusätzliche relative Phasenverschiebung, bedingt durch den Zeitverzug Δt, zwischen den Signalen 126 und 128 ist gegeben durch das Produkt aus dem Zeitverzug Δt und der Drehzahl ω des Geberrades (auch als Drehzahlgeberrad bezeichnet): Δϕ_{ω}=Δt·ω.

In Applikationen mit großem Pitchabstand, d.h. bei Polrädern beispielsweise dem Umfang des Sensierkreises geteilt durch die Polpaarzahl, begrenzt das Signal "direction" 128 die Größe des maximal möglichen Luftspalts zwischen den Sensoroberflächen der Sensoren 118 bzw. des Sensorchips 114 und dem Geberrad bzw. Drehzahlgeberrad. Dieser maximal mögliche Luftspalt wird auch als Grenzluftspalt bezeichnet. Häufig sind in solchen Applikationen die Anforderungen an die Größe des Grenzluftspalts abhängig von der Drehrichtung des Geberrads. Üblicherweise reduzieren von ω abhängige Verluste die Größe des Grenzluftspalts. Die Werte von ω sind durch die Applikation betragsmäßig nach oben begrenzt, so dass sich ein begrenzter Drehzahlbereich ergibt. Es ergibt sich typischerweise eine kritische Frequenz ωₖᵣᵢₜ, bei der die Größe des Grenzluftspalts minimal wird. Eine Aufgabe der Erfindung ist dementsprechend die Vergrößerung des Grenzluftspalts in Applikationen, in denen die Anforderungen an die Größe des Grenzluftspalts abhängig sind von der Drehrichtung des Drehzahlgeberrads, beispielsweise durch eine Beschränkung von ω auf betragsmäßig kleine Werte in einer bestimmten Drehrichtung, beispielsweise in Vorwärtsdrehrichtung. Erfindungsgemäß wird eine konstruktive Lösung vorgeschlagen, die insbesondere bei der Frequenz ωₖᵣᵢₜ die Größe von ΔD verringert oder sogar minimiert.

Dies wird durch das in Figur 2A und in Figur 2B angedeutete Verfahren erreicht. So ist in Figur 2A durch die Pfeile 130 angedeutet, dass der magnetische Flussleiter 116 relativ zum Sensorchip 114 verschoben werden kann. Da, wie beispielsweise in DE 10 2007 018 238 A1 beschrieben wird, durch die Lage des magnetischen Flussleiters 116 und/oder dessen Orientierung und/oder dessen geometrische Ausgestaltung insbesondere die senkrecht zu den Sensoroberflächen der Sensoren 118, insbesondere der Sensoren 120 und 124, verlaufenden Komponenten des Magnetfelds beeinflusst werden können, kann auf diese Weise eine Asymmetrie hinsichtlich der Sensoranordnung 112 in Vorwärts- und Rückwärtsrichtung geschaffen werden.

In Figur 2B sind wiederum, analog zu Figur 1, die Differenzsignale S (Kurve 126) bzw. D (128) als Funktion der Zeit t aufgetragen. Wie in dieser Figur durch die Pfeile 132 angedeutet ist, lässt sich durch die Verschiebung 130 des magnetischen Flussleiters 116 in Figur 2A eine Verschiebung der Phase im Richtungssignal 128 herbeiführen, wohingegen das Geschwindigkeitssignal 126 in seiner Phase zumindest näherungsweise unverändert verbleibt. Durch Variation der Position und/oder Ausgestaltung und/oder Orientierung der im Stand der Technik beschriebenen magnetischen Flussleiter 116, beispielsweise der Homogenisierungsscheibe, relativ zum Sensorchip 114 lässt sich somit die Phase Δϕ des Richtungssignals 128 relativ zum Geschwindigkeitssignal 126 systematisch variieren. Abhängig von der Drehrichtung verschiebt sich die Phase Δϕ, bei welcher das Signal "direction" 128 ausgewertet wird, somit zu Δϕ+ωΔt bzw. Δϕ-ωΔt.

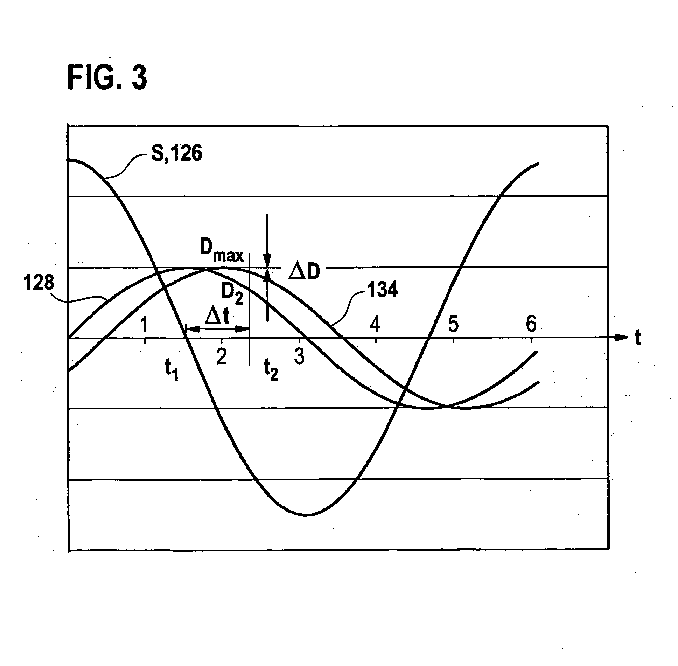

In einem Aspekt der Erfindung wird nunmehr die Phase Δϕ durch entsprechende Wahl der Position und/oder Ausgestaltung und/oder Orientierung des Sensorchips 114 und des magnetischen Flussleiters 116 derart gewählt, dass sich das Minimum aller sich über die Variation der zulässigen Werte von jeweils in beiden Drehrichtungen des Drehzahlgeberrades ergebenden Grenzluftspalte bezüglich der möglicherweise ebenso von ω oder von der Drehrichtung abhängigen Anforderungen an den Grenzluftspalt vergrößert. Dies ist in Figur 3 symbolisch dargestellt. Wiederum ist in dieser Figur als Funktion der Zeit in willkürlichen Einheiten das Geschwindigkeitssignal S (Bezugsziffer 126) dargestellt. Weiterhin sind in Figur 3 zwei Richtungssignale 128, 134 dargestellt, nämlich das ursprüngliche Richtungssignal 128 mit einer Phasenverschiebung um π/2, analog zur Darstellung in den Figuren 1 und 2B, und ein gegenüber diesem nochmals um eine Phase Δϕ verschobenes Richtungssignal 134, welches beispielsweise durch eine Verschiebung des magnetischen Flussleiters 116 analog zur Darstellung in Figur 2A erzeugt wurde. Für eine gegebene Applikation mit einer kritischen Frequenz ωₖᵣᵢₜ in Vorwärtsdrehrichtung des Drehzahlgeberrades bzw. Geberrades und weniger kritischen Anforderungen in Rückwärtsdrehrichtung des Drehzahlgeberrades lässt sich die Phasenverschiebung Δϕ beispielsweise derart wählen, dass Δϕ= ωₖᵣᵢₜΔt. Hierdurch lässt sich insbesondere für Frequenzen nahe der kritischen Drehzahl ωₖᵣᵢₜ die Größe von ΔD minimieren. Alternativ oder zusätzlich zu einer Verschiebung des magnetischen Flussleiters 116 kann auch, wie oben angedeutet, gezielt eine Variation der Geometrie des magnetischen Flussleiters 116, beispielsweise einer Homogenisierungsscheibe, zur Manipulation von Δϕ zum Zweck der Erreichung der genannten Bedingungen erfolgen. Weiterhin ist es alternativ auch denkbar, für eine gegebene Position des Sensorchips 114 und des magnetischen Flussleiters 116 die Größe des Zeitverzugs Δt gezielt zu wählen, beispielsweise zu Δt = Δϕ/ωₖᵣᵢₜ, oder auch variabel, beispielsweise zu Δt = Δϕ/ω. Dies kann beispielsweise durch ein Trimmen des Sensorchips 114 erfolgen.

## Patentansprüche

1. Verfahren zur Erfassung einer Drehung eines rotierbaren Teils, wobei ein Drehzahlerfassungssystem (110) mit einem mit dem rotierbaren Teil koppelbaren Geberrad und eine Sensoranordnung (112) verwendet wird, wobei die Sensoranordnung (112) mindestens drei räumlich zueinander versetzt angeordnete Sensoren (118) aufweist, welche ein durch das Geberrad erzeugtes und/oder beeinflusstes Magnetfeld erfassen, wobei aus Sensorsignalen der drei Sensoren (118) mindestens ein erstes Differenzsignal und mindestens ein zweites, von dem ersten Differenzsignal verschiedenes Differenzsignal gebildet werden, wobei das erste Differenzsignal und das zweite Differenzsignal phasenverschoben sind, wobei das zweite Differenzsignal zu einem Zeitpunkt t₂ erfasst wird, wobei der Zeitpunkt t₂ um eine Zeitspanne Δt gegenüber einem Zeitpunkt t₁ verschoben gewählt wird, wobei das erste Differenzsignal zum Zeitpunkt t₁ einen Nulldurchgang aufweist, wobei ein über einen vorgegebenen Drehzahlbereich einer Drehzahl des rotierbaren Teils hinweg auftretender minimaler Wert des zum Zeitpunkt t₂ jeweils erfassten zweiten Differenzsignals eine vorgegebene Untergrenze nicht unterschreiten darf, wobei innerhalb des vorgegebenen Drehzahlbereichs eine kritische Drehzahl ωₖᵣᵢₜ vorgegeben wird, wobei das erste Differenzsignal und das zweite Differenzsignal eine Phasenverschiebung von π/2 + Δϕ aufweisen, wobei Δϕ und/oder Δt derart gewählt werden, dass Δt = Δϕ/ ωₖᵣᵢₜ und zumindest in einer Vorwärtsdrehrichtung des rotierbaren Teils der maximal auftretbare Grenzluftspalt gegenüber dem maximal auftretbaren Grenzluftspalt bei einer Phasenverschiebung um π/2 vergrößert wird, wobei der maximal auftretbare Grenzluftspalt ein Luftspalt zwischen dem Geberrad und der Sensoranordnung (112) ist, bei welchem der minimale Wert des zum Zeitpunkt t₂ jeweils erfassten zweiten Differenzsignals über den vorgegebenen Drehzahlbereich hinweg die vorgegebene Untergrenze für das zweite Differenzsignal nicht unterschreitet.

2. Verfahren nach dem vorhergehenden Anspruch, wobei ωₖᵣᵢₜ die maximale Drehzahl innerhalb des Drehzahlbereichs in der Vorwärtsdrehrichtung ist.

3. Verfahren nach einem der vorhergehenden Ansprüche, wobei die Sensoranordnung (112) mindestens einen magnetischen Flussleiter (116) aufweist, vorzugsweise einen ferromagnetischen Flussleiter (116), wobei der magnetische Flussleiter (116) eingerichtet ist, um dem Magnetfeld im Bereich der Sensoren (118) eine Asymmetrie hinsichtlich der Anordnung der Sensoren (118) aufzuprägen.

4. Verfahren nach dem vorhergehenden Anspruch, wobei der magnetische Flussleiter (116) mindestens eine ferromagnetische Homogenisierungsscheibe aufweist, wobei die ferromagnetische Homogenisierungsscheibe asymmetrisch zu der Anordnung der Sensoren (118) angeordnet und/oder ausgestaltet ist.

5. Verfahren nach einem der beiden vorhergehenden Ansprüche, wobei die Sensoranordnung (112) mindestens einen mittleren Sensor (122), mindestens einen linken Sensor (120) und mindestens einen rechten Sensor (124) aufweist, wobei der linke Sensor (120) und der rechte Sensor (124) auf gegenüberliegenden Seiten des mittleren Sensors (122) angeordnet sind, wobei der magnetische Flussleiter (116) eingerichtet ist, um auf einer Sensoroberfläche des rechten Sensors (124) und auf einer Sensoroberfläche des linken Sensors (120) im Mittel unterschiedliche senkrechte Komponenten des Magnetfeldes zu den Sensoroberflächen zu erzeugen.

6. Verfahren nach einem der drei vorhergehenden Ansprüche, wobei eine Phasenverschiebung π/2 + Δϕ zwischen dem ersten Differenzsignal und dem zweiten Differenzsignal durch eine Ausgestaltung und/oder räumliche Positionierung und/oder räumliche Orientierung des magnetischen Flussleiters (116) eingestellt wird.

7. Verfahren nach einem der vorhergehenden Ansprüche, wobei die Sensoranordnung (112) mindestens einen mittleren Sensor (122), mindestens einen linken Sensor (120) und mindestens einen rechten Sensor (124) aufweist, wobei der linke Sensor (120) und der rechte Sensor (124) auf gegenüberliegenden Seiten des mittleren Sensors (122) angeordnet sind, wobei das erste Differenzsignal ein Geschwindigkeitssignal (126) ist, welches aus einer Differenz zwischen einem Sensorsignal des rechten Sensors (124) und des linken Sensors (120) gebildet wird, wobei das zweite Differenzsignal ein Richtungssignal (128) ist, welches aus einer Differenz zwischen einem Sensorsignal des mittleren Sensors (122) und den Sensorsignalen des rechten Sensors (124) und des linken Sensors (120) gebildet wird.

8. Drehzahlerfassungssystem (110) zur Durchführung des Verfahrens nach einem der Ansprüche 1 bis 9 zur Erfassung einer Drehung eines rotierbaren Teils, umfassend ein mit einem mit dem rotierbaren Teil koppelbares Geberrad und eine Sensoranordnung (112), wobei die Sensoranordnung (112) mindestens drei räumlich zueinander versetzt angeordnete Sensoren (118) aufweist, welche eingerichtet sind, um ein durch das Geberrad erzeugtes und/oder beeinflusstes Magnetfeld zu erfassen, wobei aus Sensorsignalen der drei Sensoren (118) mindestens ein erstes Differenzsignal und mindestens ein zweites, von dem ersten Differenzsignal verschiedenes Differenzsignal gebildet werden, wobei das erste Differenzsignal und das zweite Differenzsignal phasenverschoben sind, wobei das zweite Differenzsignal zu einem Zeitpunkt t₂ erfasst wird, wobei der Zeitpunkt t₂ um eine Zeitspanne Δt gegenüber einem Zeitpunkt t₁ verschoben gewählt ist, wobei das erste Differenzsignal zum Zeitpunkt t₁ einen Nulldurchgang aufweist, wobei ein über einen vorgegebenen Drehzahlbereich einer Drehzahl des rotierbaren Teils hinweg auftretender minimaler Wert des zum Zeitpunkt t₂ jeweils erfassten zweiten Differenzsignals eine vorgegebene Untergrenze nicht unterschreiten darf, wobei innerhalb des vorgegebenen Drehzahlbereichs eine kritische Drehzahl ωₖᵣᵢₜ vorgegeben ist, wobei die Sensoranordnung (112) mindestens einen magnetischen Flussleiter (116) aufweist, vorzugsweise einen ferromagnetischen Flussleiter (116), wobei der magnetische Flussleiter (116) eingerichtet ist, um dem Magnetfeld im Bereich der Sensoren (118) eine Asymmetrie hinsichtlich der Anordnung der Sensoren derart aufzuprägen, dass die Phasenverschiebung des ersten Differenzsignals und des zweiten Differenzsignals einen Wert von n/2 + Δϕ aufweist, wobei Δϕ und/oder Δt derart gewählt sind, dass Δt = Δϕ/ωₖᵣᵢₜ und zumindest in einer Vorwärtsdrehrichtung des rotierbaren Teils der maximal auftretbare Grenzluftspalt gegenüber dem maximal auftretbaren Grenzluftspalt bei einer Phasenverschiebung um π/2 vergrößert wird, wobei der maximal auftretbare Grenzluftspalt ein Luftspalt zwischen dem Geberrad und der Sensoranordnung (112) ist, bei welchem der minimale Wert des zum Zeitpunkt t₂ jeweils erfassten zweiten Differenzsignals über den vorgegebenen Drehzahlbereich hinweg die vorgegebene Untergrenze für das zweite Differenzsignal nicht unterschreitet.

## Claims

1. Method for measuring a rotation of a rotatable part, wherein a rotational-speed-measuring system (110) with a signal transmitter wheel, which can be coupled to the rotatable part, and a sensor arrangement (112) are used, wherein the sensor arrangement (112) has at least three sensors (118) which are arranged spatially offset with respect to one another and which measures a magnetic field which is generated and/or influenced by the signal transmitter wheel, wherein at least one first differential signal is formed from sensor signals of the three sensors (118) and at least one second differential signal is formed which is different from the first differential signal, wherein the first differential signal and the second differential signal are phase-shifted, wherein the second differential signal is measured at a time t₂, wherein the time t₂ is selected such that it is shifted with respect to a time t₁ by a time period Δt, wherein the first differential signal has a zero crossover at the time t₁, wherein a minimum value, occurring over a predefined rotational speed range of a rotational speed of the rotatable part, of the second differential signal which is respectively measured at the time t₂ must not undershoot a predefined lower limit, wherein a critical rotational speed ω_{crit} is provided within the predefined rotational speed range, wherein the first differential signal and the second differential signal have a phase shift of π/2 + Δϕ, wherein Δϕ and/or Δt are selected such that Δt = Δϕ/ω_{crit}, and at least in a forward rotational direction of the rotatable part the maximum boundary air gap which can occur is increased compared to the maximum boundary air gap which can occur in the case of a phase shift by π/2, wherein the maximum boundary air gap which can occur is an air gap between the signal transmitter wheel and the sensor arrangement (112), in the case of which the minimum value of the second differential signal which is respectively measured at the time t₂ does not undershoot the predefined lower limit for the second differential signal over the predefined rotational speed range.

2. Method according to the preceding claim, wherein ω_{crit} is the maximum rotational speed within the rotational speed range in the forward rotational direction.

3. Method according to one of the preceding claims, wherein the sensor arrangement (112) has at least one magnetic flux conductor (116), preferably a ferromagnetic flux conductor (116), wherein the magnetic flux conductor (116) is configured to impress on the magnetic field in the region of the sensors (118) an asymmetry with respect to the arrangement of the sensors (118).

4. Method according to the preceding claim, wherein the magnetic flux conductor (116) has at least one ferromagnetic homogenization disc, wherein the ferromagnetic homogenization disc is arranged and/or configured asymmetrically with respect to the arrangement of the sensors (118).

5. Method according to one of the two preceding claims, wherein the sensor arrangement (112) has at least one central sensor (122), at least one left-hand sensor (120) and at least one right-hand sensor (124), wherein the left-hand sensor (120) and the right-hand sensor (124) are arranged on opposite sides of the central sensor (122), wherein the magnetic flux conductor (116) is configured to generate on average different vertical components of the magnetic field with respect to the sensor surfaces on a sensor surface of the right-hand sensor (124) and on a sensor surface of the left-hand sensor (120).

6. Method according to one of the three preceding claims, wherein a phase shift π/2 + Δϕ between the first differential signal and the second differential signal is set by a configuration and/or spatial positioning and/or spatial orientation of the magnetic flux conductor (116).

7. Method according to one of the preceding claims, wherein the sensor arrangement (112) has at least one central sensor (122), at least one left-hand sensor (120) and at least one right-hand sensor (124), wherein the left-hand sensor (120) and the right-hand sensor (124) are arranged on opposite sides of the central sensor (122), wherein the first differential signal is a speed signal (126) which is formed from a differential between a sensor signal of the right-hand sensor (124) and of the left-hand sensor (120), wherein the second differential signal is a direction signal (128) which is formed from the differential between a sensor signal of the central sensor (122) and the sensor signals of the right-hand sensor (124) and of the left-hand sensor (120).

8. Rotational-speed-measuring system (110) for carrying out the method according to one of Claims 1 to 9, for measuring a rotation of a rotatable part, wherein a signal transmitter wheel, which can be coupled to the rotatable part, and a sensor arrangement (112) are used, wherein the sensor arrangement (112) has at least three sensors (118) which are arranged spatially offset with respect to one another and which are configured to measure a magnetic field which is generated and/or influenced by the signal transmitter wheel, wherein at least one first differential signal is formed from sensor signals of the three sensors (118) and at least one second differential signal is formed which is different from the first differential signal, wherein the first differential signal and the second differential signal are phase-shifted, wherein the second differential signal is measured at a time t₂, wherein the time t₂ is selected such that it is shifted with respect to a time t₁ by a time period Δt, wherein the first differential signal has a zero crossover at the time t₁, wherein a minimum value, occurring over a predefined rotational speed range of a rotational speed of the rotatable part, of the second differential signal which is respectively measured at the time t₂ must not undershoot a predefined lower limit, wherein a critical rotational speed ω_{crit} is provided within the predefined rotational speed range, wherein the sensor arrangement (112) has at least one magnetic flux conductor (116), preferably a ferromagnetic flux conductor (116), wherein the magnetic flux conductor (116) is configured to impress on the magnetic field in the region of the sensors (118) an asymmetry with respect to the arrangement of the sensors in such a way that the phase shift of the first differential signal and of the second differential signal has a value of π/2 + Δϕ, wherein Δϕ and/or Δt are selected such that Δt = Δϕ/ω_{crit}, and at least in a forward rotational direction of the rotatable part the maximum boundary air gap which can occur is increased compared to the maximum boundary air gap which can occur in the case of a phase shift by π/2, wherein the maximum boundary air gap which can occur is an air gap between the signal transmitter wheel and the sensor arrangement (112), in the case of which the minimum value of the second differential signal which is respectively measured at the time t₂ does not undershoot the predefined lower limit for the second differential signal over the predefined rotational speed range.

## Revendications

1. Procédé de détection de la rotation d'une pièce rotative, par recours à un système (110) de saisie de la vitesse de rotation présentant une roue émettrice apte à être accouplée à la pièce rotative et un ensemble (112) de capteurs,
l'ensemble (112) de capteurs présentant au moins trois capteurs (118) disposés dans l'espace en décalage mutuel et détectant un champ magnétique que la roue émettrice produit et/ou sur lequel la roue émettrice agit,
au moins un premier signal de différence et au moins un deuxième signal de différence différent du premier signal de différence étant formés à partir de signaux des trois capteurs (118),
le premier signal de différence et le deuxième signal de différence étant déphasés,
le deuxième signal de différence étant détecté à un instant t₂, l'instant t₂ étant décalé d'une durée Δt par rapport à l'instant t₁,
le premier signal de différence présentant un passage par zéro à l'instant t₁,
la valeur minimale du deuxième signal de différence détectée à l'instant t₂ dans une plage prédéterminée de vitesse de rotation de la partie rotative ne pouvant être inférieure à une limite inférieure prédéterminée,
une vitesse critique de rotation ωₖᵣᵢₜ étant prédéterminée à l'intérieur de la plage prédéterminée de vitesse de rotation,
le premier signal de différence et le deuxième signal de différence présentant un déphasage de π/2 + Δϕ, Δϕ et/ou Δt étant sélectionnés de telle sorte que Δt = Δϕ/ωₖᵣᵢₜ et, au moins dans le sens de rotation vers l'avant de la pièce rotative, l'entrefer limite maximum étant augmenté par rapport à l'entrefer limite maximum à un déphasage de π/2,
l'entrefer limite maximum étant un entrefer entre la roue émettrice et l'ensemble (112) de capteurs pour lequel la valeur minimale du deuxième signal de différence détectée à l'instant t₂ dans la plage prédéterminée de vitesse de rotation reste inférieure à la limite inférieure prédéterminée du deuxième signal de différence.

2. Procédé selon la revendication précédente, dans lequel ωₖᵣᵢₜ est la vitesse de rotation maximale à l'intérieur de la plage de vitesse de rotation dans le sens de rotation vers l'avant.

3. Procédé selon l'une des revendications précédentes, dans lequel l'ensemble (112) de capteurs présente au moins un guide (116) de flux magnétique, de préférence un guide ferromagnétique (116) de flux, le guide (116) de flux magnétique étant conçu pour imprimer au champ magnétique une asymétrie par rapport à l'agencement des capteurs (118) au niveau des capteurs (118).

4. Procédé selon la revendication précédente, dans lequel le guide (116) de flux magnétique présente au moins un disque ferromagnétique d'homogénéisation, le disque ferromagnétique d'homogénéisation étant disposé et/ou configuré asymétriquement par rapport à l'agencement des capteurs (118).

5. Procédé selon l'une des deux revendications qui précèdent, dans lequel l'ensemble (112) de capteurs présente au moins un capteur central (122), au moins un capteur gauche (120) et au moins un capteur droit (124), le capteur gauche (120) et le capteur droit (124) étant disposés sur des côtés opposés du capteur central (122), le guide (116) de flux magnétique étant conçu pour former sur une surface du capteur droit (124) et sur une surface du capteur gauche (120) des composantes perpendiculaires moyennement différentes du champ magnétique par rapport aux surfaces des capteurs.

6. Procédé selon l'une des trois revendications qui précèdent, dans lequel un déphasage π/2 + Δϕ entre le premier signal de différence et le deuxième signal de différence est établi par la configuration, le positionnement spatial et/ou l'orientation spatiale du guide (116) de flux magnétique.

7. Procédé selon l'une des revendications précédentes, dans lequel l'ensemble (112) de capteurs présente au moins un capteur central (122), au moins un capteur gauche (120) et au moins un capteur droit (124), le capteur gauche (120) et le capteur droit (124) étant disposés sur des côtés opposés du capteur central (122), le premier signal de différence étant un signal de vitesse (126) formé à partir de la différence entre le signal du capteur droit (124) et celui du capteur gauche (120), le deuxième signal de différence étant un signal de direction (128) formé à partir de la différence entre le signal du capteur central (122) et les signaux du capteur gauche (124) et du capteur droit (120).

8. Système (110) de détection de la vitesse de rotation en vue de l'exécution du procédé selon l'une des revendications 1 à 9, pour détecter la rotation d'une pièce rotative, le système présentant une roue émettrice apte à être accouplée à la pièce rotative et un ensemble (112) de capteurs,
l'ensemble (112) de capteurs présentant au moins trois capteurs (118) disposés dans l'espace en décalage mutuel et conçus pour détecter un champ magnétique que la roue émettrice produit et/ou sur lequel la roue émettrice agit,
au moins un premier signal de différence et au moins un deuxième signal de différence différent du premier signal de différence étant formés à partir de signaux des trois capteurs (118),
le premier signal de différence et le deuxième signal de différence étant déphasés,
le deuxième signal de différence étant détecté à un instant t₂, l'instant t₂ étant décalé d'une durée Δt par rapport à l'instant t₁,
le premier signal de différence présentant un passage par zéro à l'instant t₁,
la valeur minimale du deuxième signal de différence détectée à l'instant t₂ dans une plage prédéterminée de vitesse de rotation de la partie rotative ne pouvant être inférieure à une limite inférieure prédéterminée,
une vitesse critique de rotation ωₖᵣᵢₜ étant prédéterminée à l'intérieur de la plage prédéterminée de vitesse de rotation,
l'ensemble (112) de capteurs présentant au moins un guide (116) de flux magnétique, de préférence un guide ferromagnétique (116) de flux, le guide (116) de flux magnétique étant conçu pour imprimer au champ magnétique une asymétrie par rapport à l'agencement des capteurs au niveau des capteurs (118), de telle sorte que le déphasage entre le premier signal de différence et le deuxième signal de différence présente la valeur π/2 + Δϕ, Δϕ et/ou Δt étant sélectionnés de telle sorte que Δt = Δϕ/ωₖᵣᵢₜ et, au moins dans le sens de rotation vers l'avant de la pièce rotative, l'entrefer limite maximum étant augmenté par rapport à l'entrefer limite maximum à un déphasage de π/2,
l'entrefer limite maximum étant un entrefer entre la roue émettrice et l'ensemble (112) de capteurs pour lequel la valeur minimale du deuxième signal de différence détectée à l'instant t₂ dans la plage prédéterminée de vitesse de rotation reste inférieure à la limite inférieure prédéterminée du deuxième signal de différence.
